Europäisches Patentamt

European Patent Office

Office européen des brevets

(11) Veröffentlichungsnummer: 0 480 516 A2

## (12) EUROPÄISCHE PATENTANMELDUNG

(21) Anmeldenummer: 91202583.0

(22) Anmeldetag: 03.10.91

(51) Int. Cl.5: H02M 3/335, H02M 1/12

(30) Priorität: 11.10.90 DE 4032199

(43) Veröffentlichungstag der Anmeldung:
15.04.92 Patentblatt 92/16

(84) Benannte Vertragsstaaten:
DE FR GB

(71) Anmelder: Philips Patentverwaltung GmbH
Wendenstrasse 35 Postfach 10 51 49
W-2000 Hamburg 1(DE)

(84) DE

(71) Anmelder: N.V. Philips' Gloeilampenfabrieken
Groenewoudseweg 1
NL-5621 BA Eindhoven(NL)

(84) FR GB

(72) Erfinder: Hahn, Friedrich
Hauptstrasse 53
W-2940 Wilhelmshaven(DE)
Erfinder: Kording, Friedrich
Leharstrasse 97
W-2000 Hamburg(DE)

(74) Vertreter: Peters, Carl Heinrich, Dipl.-Ing. et al
Philips Patentverwaltung GmbH
Wendenstrasse 35 Postfach 10 51 49
W-2000 Hamburg 1(DE)

(54) Stromversorgungsanordnung.

(57) Beschrieben wird eine Stromversorgungsanordnung, die universell einsetzbar ist, für eine Speisung aus einem Energieversorgungsnetz an dieses möglichst geringe Störspannungen und/oder -ströme abgibt und mit einer möglichst geringen Anzahl von Bauteilen auskommt. Die Stromversorgungsanordnung ist mit einer eine Gleichspannung liefernden Quelle (1) versehen, an die eine Reihenschaltung aus einer Induktivität (4), einer Primärwicklung (5) eines Übertragers (6) und einem Schalter (7) parallel zu einer Reihenschaltung zweier bezüglich der Gleichspannung in Sperrichtung gepolter Diodenanordnungen (8, 9) angeschlossen ist. Zwischen dem Verbindungspunkt (10) der Diodenanordnungen (8, 9) untereinander und dem Verbindungspunkt (11) zwischen der Induktivität (4) und der Primärwicklung (5) ist ein Speicherkondensator (12) angeordnet.

FIG.1

Die Erfindung bezieht sich auf eine Stromversorgungsanordnung.

Bei gebräuchlichen Stromversorgungsanordnungen, die als Netzteile mit Brückengleichrichtern zum Gleichrichten der Netzspannung ausgerüstet sind, befindet sich unmittelbar hinter dem Brückengleichrichter ein Energiespeicher, der die vom Brückengleichrichter gelieferte, pulsierende Gleichspannung glättet und durch seine Kapazität die Zeit zwischen zwei Halbwellen überbrückt. Energie wird dadurch im Netz nur in der Spitze der Sinushalbwelle entnommen. Damit entspricht die Belastung des Netzes nicht einer ohmschen Last mit gleichmäßiger Energieentnahme, so daß Netzstörungen durch Oberwellen der Netzfrequenz entstehen. Diese Nachteile werden vermieden, wenn die Energieentnahme aus dem Netz kontinuierlicher, d.h. nicht nur in der Spitze der Sinushalbwelle der pulsierenden Gleichspannung vom Brückengleichrichter, erfolgt. Eine gleichmäßigere Energieentnahme aus dem Netz läßt sich dadurch erreichen, daß dem Brückengleichrichter ein Schaltnetzteil nachgeschaltet wird, das dem Netz kontinuierlich Energie entnimmt und dem Energiespeicher zufuhrt. Der Energiespeicher überbrückt dabei die Zeit zwischen zwei Sinushalbwellen und dient außerdem zum Glätten der Schaltfrequenz des Schaltnetzteils. Um den Energiespeicher hinreichend klein dimensionieren zu können, ohne gleichzeitig auf eine geglättete Spannung verzichten zu müssen, werden dann in der Regel zwei Schaltnetzteile hintereinander geschaltet, wobei das zweite Schaltnetzteil Energie aus dem Energiespeicher entnimmt und - vorzugsweise über einen Transformator - in die für die anzuschließende Last benötigte Versorgungsgleichspannung überführt.

Eine derartige Schaltungsanordnung mit zwei Schaltnetzteilen ist aufwendig und damit in der Herstellung sehr kostspielig. Insbesondere für Geräte aus dem Konsumbereich ist daher eine einfachere Lösung anzustreben.

Aus VALVO Technische Information 860530, Abschnitt 5.2.2., ist eine Horizontal-Ablenkschaltung und Spannungsversorgungsteil zur Spannungsversorgung und zur Erzeugung der Horizontal-Ablenkströme in einem Fernsehgerät bekannt. In diesem Abschnitt ist ein Konzept einer kombinierten Schaltnetzteil-H-Ablenkschaltung mit nur einem Schalttransistor beschrieben. Gegenüber der Kettenschaltung eines Schaltnetzteils und einer H-Ablenkschaltung, wie sie in dieser Veröffentlichung ebenfalls beschrieben worden ist, werden außer einem Leistungs-Schalttransistor auch einige andere Bauelemente eingespart, insbesondere die Schaltung zur Erzeugung der Steuerimpulse für das gesonderte Schaltnetzteil.

Die Erfindung hat die Aufgabe, eine Stromversorgungsanordnung zu schaffen, die universell einsetzbar ist, für eine Speisung aus einem Energieversorgungsnetz an dieses möglichst geringe Störspannungen und/oder -ströme abgibt und mit einer möglichst geringen Anzahl von Bauteilen auskommt.

Diese Aufgabe wird erfindungsgemäß gelöst durch eine Stromversorgungsanordnung mit einer eine Gleichspannung liefernden Quelle, an die eine Reihenschaltung aus einer Induktivität, einer Primärwicklung eines Übertragers und einem Schalter parallel zu einer Reihenschaltung zweier bezüglich der Gleichspannung in Sperrichtung gepolter Diodenanordnungen angeschlossen ist, wobei zwischen dem Verbindungspunkt der Diodenanordnungen untereinander und dem Verbindungspunkt zwischen der Induktivität und der Primärwicklung ein Speicherkondensator angeordnet ist.

Mit der erfindungsgemäßen Stromversorgungsanordnung ist es möglich, durch eine einfach aufgebaute Schaltungsanordnung aus der Quelle gleichmäßig Energie an eine angeschlossene, zu versorgende Last weiterzuleiten. Durch ungleichmäßige Energieentnahme aus der Quelle hervorgerufene Störungen werden dadurch vermieden.

An dieser Stelle sei erwähnt, daß aus der DE-OS 35 37 536 ein Eintakt-Sperr- oder Durchflußwandler mit geringer Sperrspannung für den Schaltertransistor bekannt ist. Darin ist die Primärwicklung eines Sperr- oder Durchflußwandlers mit einer Anzapfung versehen, die etwa dem maximalen Tastverhältnis des Betriebs des Schaltertransistors entspricht. Diese Anzapfung ist mit einem Kondensator verbunden, der wiederum über eine Diode mit dem Nullpotential und über eine weitere Diode mit dem Bezugspotential verbunden ist. Dadurch soll jede Halbwelle der Wandlerschwingung an Null oder an Bezugspotential festgeklemmt werden, so daß keine hohen Rückschlagspannungen entstehen können. Dadurch sollen Transistoren mit verringerten Sperrspannungen einsetzbar werden.

Bei dieser Schaltungsanordnung sind die Teile der Primärwicklung beiderseits der Anzapfung magnetisch miteinander gekoppelt, und der Kondensator dient nur zum Abbau von Spannungsspitzen, nicht jedoch als Energiespeicher zur Überbrückung und zum Ausgleich wellenförmiger Netz-Spannungen. Diese Aufgabe ist vielmehr einem gesondert mit dem Eingang des Wandlers verbundenen Elko vorbehalten. Wie aus der Beschreibung zur DE-OS 35 37 536 hervorgeht, wird auch bei diesem Wandler Energie der Quelle und damit dem Elko nur diskontinuierlich entnommen und in bestimmten Zeitabschnitten sogar aus der Primärwicklung und dem Kondensator in den Elko der Versorgungsspannung zurückgeliefert. Dies bedeutet jedoch einen besonders ungleichmäßigen und damit störungshaltigen Energiefluß.

Weitere Ausgestaltungen und Vorteile der Erfindung sind den Unteransprüchen zu entnehmen sowie in der nachfolgenden Zeichnung dargestellt, in der

Fig. 1 ein erstes Ausführungsbeispiel der Erfindung,

Fig. 2 ein zweites Ausführungsbeispiel der Erfindung mit einer Erweiterung zur Energierückgewinnung und

Fig. 3 ein drittes, etwas detaillierter dargestelltes Ausführungsbeispiel mit einer Erweiterung durch einen Widerstandsspannungsteiler zeigt.

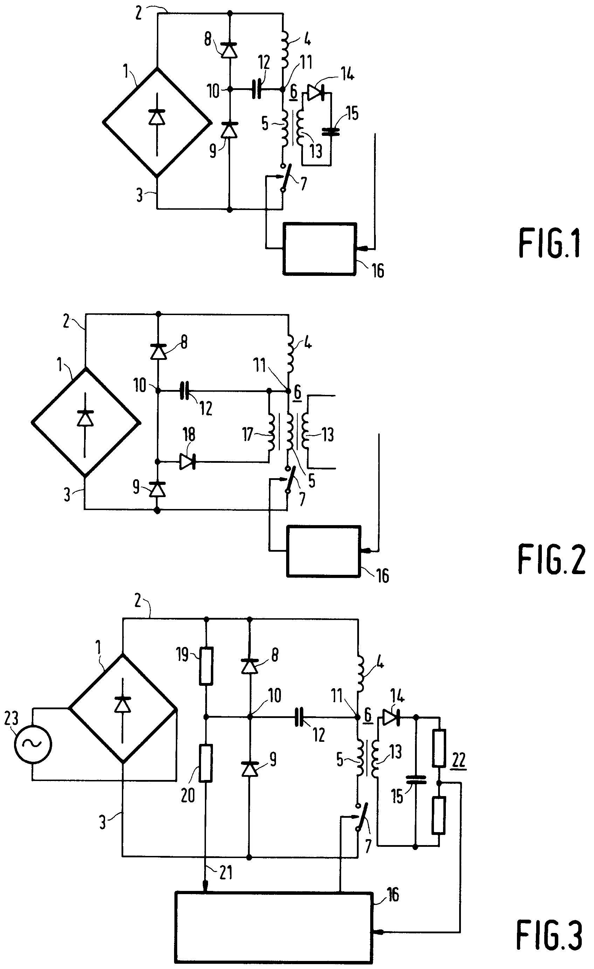

In der Schaltungsanordnung nach Fig. 1 ist eine Quelle 1 enthalten, die eine Gleichspannung liefert und einen Netzgleichrichter umfaßt, durch den sie aus einem Wechselspannungsnetz mit Energie versorgt wird. An die Quelle 1 ist an zwei Anschlüssen 2, 3, an denen die Gleichspannung abgegeben wird, eine Reihenschaltung aus einer Induktivität 4, einer Primärwicklung 5 eines Übertragers 6 und einem Schalter 7 angeschlossen, die parallel zu einer Reihenschaltung zweier bezüglich der Gleichspannung in Sperrichtung gepolter Dioden angeordnet ist. Zwischen dem Verbindungspunkt 10 der Dioden untereinander und dem Verbindungspunkt 11 zwischen der Induktivität 4 und der Primärwicklung 5 ist ein Speicherkondensator 12 angeordnet.

Der Übertrager 6 weist weiterhin eine Sekundärwicklung 13 auf, von der über eine Gleichrichterdiode 14 eine gleich-gerichtete und in einem Siebkondensator 15 geglättete Spannung zur Energieversorgung einer nicht dargestellten Last abgegeben wird. Weiterhin ist eine Steuerschaltung 16 zum Steuern der Schaltfrequenz oder wahlweise des Tastverhältnisses - oder auch beider - der Leit- und Sperrintervalle für den Schalter 7 abhängig von der gleichgerichteten Spannung am Siebkondensator 15 vorgesehen.

Mit dieser Stromversorgungsanordnung wird die Gewinnung einer stabilen Versorgungsspannung für die nicht dargestellte Last aus der von der Quelle 1 gelieferten, pulsierenden Gleichspannung mit einem sehr geringen Aufwand an Bauelementen, insbesondere mit nur einem Schalter 7, einer Steuerschaltung 16 und verhältnismäßig klein dimensionierten Speicher- bzw. Siebkondensatoren 12 bzw. 15 ermöglicht. Außerdem erfolgt bei dieser Schaltungsanordnung eine Energieentnahme aus der Quelle 1 über wenigstens einen sehr großen Teil einer Pulsperiode der von der Quelle 1 abgegebenen, pulsierenden Gleichspannung, so daß das die Energie der Quelle 1 liefernde Netz über den darin vorhandenen Netzgleichrichter sehr gleichmäßig belastet wird. Damit ist eine wenigstens weitgehende Annäherung der dem Netz entnommenen Ströme an einen idealen Sinusverlauf gewährleistet, wodurch die Stromversorgungsanordnung keine Störungen an das sie mit Energie versorgende Netz abgibt. Somit lassen sich in sehr einfacher Weise auch sehr strenge Vorschriften zur Begrenzung von Netzstörungen einhalten.

Die Spannung, die sich am Speicherkondensator 12 im Betrieb einstellt, wird durch die von der Qulle 1 gelieferte Gleichspannung und durch das Verhältnis der Induktivitätswerte der Induktivität 4 zur Primärwicklung 5 bestimmt. Diese Spannung ist von Schwankungen der Last an der Sekundärwicklung 13 unabhängig, so lange die Indukti-vität 4 und die Primärwicklung 5 in jeder Schaltperiode des Schalters 7 die in ihnen gespeicherte Energie vollständig wieder - an den Speicherkondensator 12 - abgeben, was durch eine Anpassung der Dimensionierung dieser Größen erreicht wird.

Fig. 2 zeigt eine Abwandlung des Ausführungsbeispiels nach Fig. 1, bei der übereinstimmende Elemente wieder mit denselben Bezugszeichen versehen sind. Gegenüber der Schaltungsanordnung nach Fig. 1 ist in Fig. 2 der Übertrager 6 mit einer zusätzlichen Energierückgewinnungswicklung 17 versehen, die mit einer Rückschlagdiode 18 eine Reihenanordnung bildet, die dem Speicherkondensator 12 parallelgeschaltet ist. Dabei ist die Anode der Rückschlagdiode 18 mit dem Verbindungspunkt 10 der Dioden 8, 9 verbunden. Durch die Energierückgewinnungswicklung kann Energie, die im Übertrager 6 gespeichert ist und bei geöffnetem Schalter 7 weder über die Primärwicklung 5 noch über die Sekundärwicklung 13 entnommen wird, dem Speicherkondensator 12 rückgeführt werden. Dadurch wird der Wirkungsgrad der Stromversorgungsanordnung verbessert, und diese auch als Durchflußwandler betreibbar.

Bei Inbetriebnahme der erfindungsgemäßen Stromversorgungsanordnung, d.h. beim Einschalten der Quelle 1 und bei zunächst entladenem Speicherkondensator 12 fließt durch diesen aufgrund der Sperrwirkung der Dioden 8, 9 noch kein Strom. Der Strom, der sich in der Induktiviät 4 ausbildet, fließt damit uneingeschränkt durch die Primärwicklung 5, so daß eine schnelle Energieversorgung auch der Sekundärwicklung 13 und damit des Siebkondensators 15 gegeben ist. Dadurch wird beim Einschalten der Quelle 1 das Anlaufen der angeschlossenen Last beschleunigt. Während des weiteren Betriebes wird dann der Speicherkondensator 12 ebenfalls aufgeladen.

Fig. 3 zeigt eine weitere Abwandlung der vorstehend beschriebenen Ausführungsbeispiele mit wiederum identischer Bezeichnung bereits beschriebener Elemente. Diese Abwandlung der erfindungsgemäßen Stromversorgungsanordnung enthält einen Widerstandsspannungsteiler aus zwei Widerständen 19, 20. Ein Widerstand 19 dieses Widerstandsspannungsteilers ist mit dem Anschluß der Quelle 1 verbunden, während der Verbindungspunkt zwischen den Widerständen 19, 20 mit dem Verbindungspunkt 10 zwischen den Dioden 8, 9 verbunden ist. Der Widerstandsspannungsteiler 19, 20 ist somit mit seinem ersten Endanschluß an die Verbindung 2 zwischen der Induktivität 4 und der Quelle 1 und mit seiner Mittenanzapfung an den Verbindungspunkt 10 der Diodenanordnung 8, 9 angeschlossen. Sein zweiter Endanschluß, der vom Verbindungspunkt 10 abgewandte Anschluß des Widerstands 20, ist mit der Steuerschaltung 16 über eine Leitung 21 zum Zuführen eines Stromes verbunden.

Der Widerstandsspannungsteiler 19, 20 ist für mehrere Aufgaben einsetzbar. Zum einen wird durch die Widerstände 19, 20 dem Speicherkondensator 12 eine Vorladung zugeführt, durch die das Anlaufen der Stromversorgungsanordnung bei Inbetriebnahme weiter erleichtert wird. Weiterhin werden durch die Widerstände 19, 20 Schwingungen gedämpft, die bei ungünstigen Betriebsverhältnissen insbesondere am Verbindungspunkt 11 auftreten können.

Durch den Widerstandsspannungsteiler wird aber auch das Anlaufen der Steuerschaltung 16 begünstigt. Bei Inbetrieb-nahme der Stromversorgungsanordnung, d.h. beim Einschalten der Quelle 1, wird der von der Steuerquelle 16 benötigte Startstrom durch den Widerstandsspannungsteiler 19, 20 geliefert, noch bevor der Speicherkondensator 12 geladen wird. Damit ist die Steuerschaltung 16 unmittelbar nach dem Einschalten betriebsbereit und wird eine von Anfang an sichere und definierte Betriebsweise der erfindungsgemäßen Stromversorgungsanordnung gewährleistet.

Während des Betriebes kann über den Widerstandsspannungsteiler 19, 20 außerdem ein Detektorsignal entnommen werden, durch welches der Steuerschaltung 16 eine Information über die Betriebszustände des Speicherkondensators 12, der Induktivität 4 und der von der Quelle 1 gelieferten Spannung zugeführt wird. Damit ist eine Ausregelung von Netzschwankungen durch die Steuerschaltung 16 möglich. Die Steuerschaltung kann außerdem zum Detektieren von Betriebszuständen verwendet werden, die die Gefahr von Zerstörungen der Schaltungsanordnung bergen.

In der Ausführungsform nach Fig. 3 ist weiterhin parallel zum Siebkondensator 15 ein zweiter Spannungsteiler 22 eingezeichnet, der zum Abgreifen der von der Steuerschaltung 16 zu detektierenden Versorgungsspannung für die nicht dargestellte Last dient. Außerdem ist zusätzlich zur Quelle 1 deren Speisung durch ein Wechselstromnetz - dargestellt als Wechselspannungsquelle 23 - angedeutet.

Die Stromversorgungsanordnung nach der Erfindung kann vorteilhaft auch für den sogenannten Bereitschaftsbetrieb ausgelegt sein. In dieser Betriebsart wird die nicht dargestellte Last abgeschaltet, lediglich die Steuerschaltung 16 bleibt mit den Schaltungsteilen in Betrieb, die für ein Wiederanlaufen, d.h. für eine Wiederinbetriebnahme der Last, ohne Betätigen der Quelle 1 erforderlich sind. In dieser Betriebsart wird der Steuerschaltung 16 nur eine sehr geringe Leistung zugeführt, was beispielsweise dadurch vorgenommen werden kann, daß der Schalter 7 von der Steuerschaltung 16 nur in der Umgebung der Nulldurchgänge der von der Quelle 1 abgegebenen, pulsierenden Gleichspannung betätigt wird. Dann liegt am Schalter 7 nur eine geringe Spannung an, so daß auch dessen Schaltverluste gering sind, was zu einer weiteren Verringerung des Leistungsbedarfs der Stromversorgungsanordnung im Bereitschaftsbetrieb führt. Entsprechend dieser Betriebsweise des Schalters 7 ist auch die Spannung am Speicherkondensator 12 stark vermindert.

Beim Betrieb der erfindungsgemäßen Stromversorgungsanordnung zeigt sich außerdem, daß am Schalter 7 wesentlich geringere Überspannungsspitzen auftreten, als sie bei Schaltungsanordnungen nach dem Stand der Technik vorhanden sind. Dadurch ist auch eine Vereinfachung einer dem Schalter 7 zuzuordnenden Schutzbeschaltung, durch die der Schalter 7 insbesondere bei einer Ausbildung als Halbleiterschalter gegen Zerstörungen durch zu hohe Spannungen geschützt werden muß, möglich. Das führt zu einer weiteren Vereinfachung und Verbilligung der erfindungsgemäßen Stromversorgungsanordnung.

**Patentansprüche**

1. Stromversorgungsanordnung mit einer eine Gleichspannung liefernden Quelle (1), an die eine Reihenschaltung aus einer Induktivität (4), einer Primärwicklung (5) eines Übertragers (6) und einem Schalter (7) parallel zu einer Reihenschaltung zweier bezüglich der Gleichspannung in Sperrichtung gepolter Diodenanordnungen (8, 9) angeschlossen ist, wobei zwischen dem Verbindungspunkt (10) der Diodenanordnungen (8, 9) untereinander und dem Verbindungspunkt (11) zwischen der Induktivität (4) und der Primärwicklung (5) ein Speicherkondensator (12) angeordnet ist.

2. Stromversorgungsanordnung nach Anspruch 1, dadurch gekennzeichnet, daß die Quelle (1) einen Netzgleichrichter umfaßt.

3. Stromversorgungsanordnung nach Anspruch 2, dadurch gekennzeichnet, daß die Quelle (1) zum Liefern einer pulsierenden Gleichspannung ausgebildet ist.

4. Stromversorgungsanordnung nach einem der vorhergehenden Ansprüche, gekennzeichnet durch eine Steuerschaltung (16) zum Steuern der Schaltfrequenz und/oder des Tastverhältnisses der Leit- und Sperrintervalle für den Schalter (7) abhängig von einer einer Sekundärwicklung (13) des Übertragers (6) entnommenen, gleichgerichteten Spannung (an 15).

5. Stromversorgungsanordnung nach einem der vorhergehenden Ansprüche, dadurch gekennzeichnet, daß der Übertrager (6) eine Energierückgewinnungswicklung (17) aufweist, die mit einer Rückschlagdiode (18) eine Reihenanordnung bildet, die dem Speicherkondensator (12) parallelgeschaltet ist, wobei die Anode der Rückschlagdiode (18) mit dem Verbindungs-punkt (10) der Diodenanordnungen (8, 9) verbunden ist.

6. Stromversorgungsanordnung nach Anspruch 4 oder 5 in Verbindung mit 4, gekennzeichnet durch einen Widerstandsspannungsteiler (19, 20), der mit einem ersten Endanschluß an die Verbindung (2) zwischen der Induktivität (4) und der Quelle (1) und mit einer Mittenanzapfung an den Verbindungspunkt (10) der Diodenanordnungen (8, 9) angeschlossen ist, während ein zweiter Endanschluß mit der Steuerschaltung (16) zum Zuführen eines Stromes verbunden ist.

FIG.1

FIG.2

FIG.3